# EUROPEAN PATENT APPLICATION

(11) **EP 1 115 023 A1**
(43) Date of publication of application: **11.07.2001**
(21) Application number: 00100370.6
(22) Date of filing: 07.01.2000
(51) Int. Cl.: G02C 9/00

(54) **Eyeglass frame coupling system**

(71) Applicant: Ku, Kuo-Hseng, Tainan (TW)
(72) Inventor: Ku, Kuo-Hseng, Tainan (TW)
(74) Representative: Casalonga, Axel

(57) **Abstract**

An eyeglass frame coupling system is provided for securing auxiliary eyeglass frame to a primary eyeglass frame. The coupling system includes at least one coupling magnet secured to a predetermined frame portion of the primary or auxiliary eyeglass frame and at least a clipping structure formed on the other of the primary or auxiliary eyeglass frame. The clipping structure includes a pair of opposed flanges spaced one from the other to capture the predetermined frame portion carrying the coupling magnet therebetween. At least first and second magnets are respectively secured in the pair of opposed flanges for respective attractive magnetic coupling to both of the first and second ends of the coupling magnet. By that arrangement, an increased magnetic attractive force is obtained to hold the auxiliary eyeglass frame to the primary eyeglass frame.

## Description

### BACKGROUND OF THE INVENTION

### FIELD OF THE INVENTION

This invention relates to an eyeglass frame coupling system which is capable of securely coupling an auxiliary eyeglass frame to a primary eyeglass frame, and more particularly to an eyeglass frame coupling system for the auxiliary eyeglass frame to be securely coupled to the primary eyeglass frame so as to prevent the auxiliary eyeglass frame from falling apart from the primary eyeglass frame while being worn by a user.

### DESCRIPTION OF THE RELATED ART

Because a pair of eyeglasses and a pair of sun-shading glasses are independent, it is necessary for a myope or a hyperope to carry a pair of near-sighted or a far-sighted eyeglasses and a pair of sun-shading glasses on the occasion of needing to wear a pair of sunglasses. It is very inconvenient to carry and change a pair of sunglasses and a pair of eyeglasses. Thus, auxiliary glasses being able to be coupled to a pair of primary eyeglasses were invented to overcome the inconvenience.

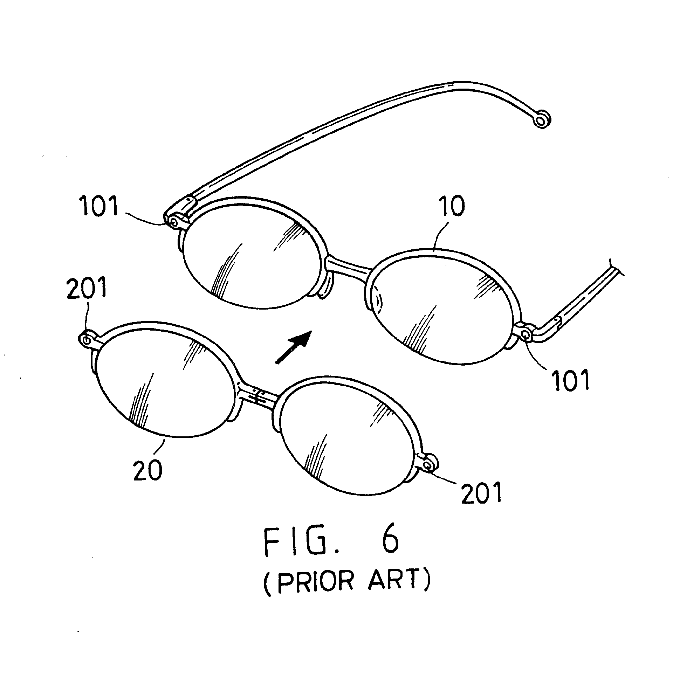

Referring to FIG. 6, a conventional auxiliary eyeglass frame 20 is provided with two magnets 201 respectively pivoted in both end portions. The auxiliary eyeglass frame 20 with magnets 201 can be secured to a primary eyeglass frame 10, which are provided with two magnets 101 in both end portions so as to be respectively attached to by the two magnets 201 of the auxiliary eyeglass frame 20.

However, because the above-mentioned conventional auxiliary eyeglass frame 20 attaches to the primary eyeglass frame 10 by the front faces of the magnets 101 and 201, the auxiliary eyeglass frame 20 will easily fall apart from the primary eyeglass frame 10 while a user are running, jumping or bumped against by external forces.

### SUMMARY OF THE INVENTION

Therefore, an objective of the present invention is to provide an eyeglass frame coupling system for securely coupling an auxiliary eyeglass frame to a primary eyeglass frame so as to prevent the auxiliary eyeglass frame from falling apart from the primary eyeglass frame.

Another objective of the present invention is to provide an eyeglass frame coupling system which can obtain an increased magnetic attractive force to hold the auxiliary eyeglass frame to the primary eyeglass frame.

Accordingly, the eyeglass frame coupling system in the present invention is provided for securing auxiliary eyeglass frame to a primary eyeglass frame. The coupling system includes at least one coupling magnet secured to a predetermined frame portion of the primary or auxiliary eyeglass frame and at least a clipping structure formed on the other of the primary or auxiliary eyeglass frame. The clipping structure includes a pair of opposed flanges spaced one from the other to capture the predetermined frame portion carrying the coupling magnet therebetween. At least first and second magnets are respectively secured in the pair of opposed flanges for respective attractive magnetic coupling to both of the first and second ends of the coupling magnet. By that arrangement, an increased magnetic attractive force is obtained to hold the auxiliary eyeglass frame to the primary eyeglass frame.

### BRIEF DESCRIPTION OF THE DRAWINGS

Other features and advantages of the present invention will become apparent in the following detailed description of the preferred embodiments with reference to the accompanying drawings, in which :
FIG. 1 is an exploded perspective view of an auxiliary eyeglass frame and a primary eyeglass frame with coupling system in the present invention;
FIG. 2 is a schematic view showing the way of the auxiliary eyeglass frame being coupled to the primary eyeglass frame in the present invention;
FIG. 3 is a schematic sectional view of the auxiliary eyeglass frame coupled to the primary eyeglass frame in the present invention;
FIG. 4 is an exploded perspective view of another embodiment of the present invention;
FIG. 5 is an exploded perspective view of one more embodiment of the present invention; and,
FIG. 6 is an exploded perspective view of a conventional auxiliary eyeglass frame and a primary eyeglass frame.

### DETAILED DESCRIPTION OF THE PREFERRED EMBODIMENTS

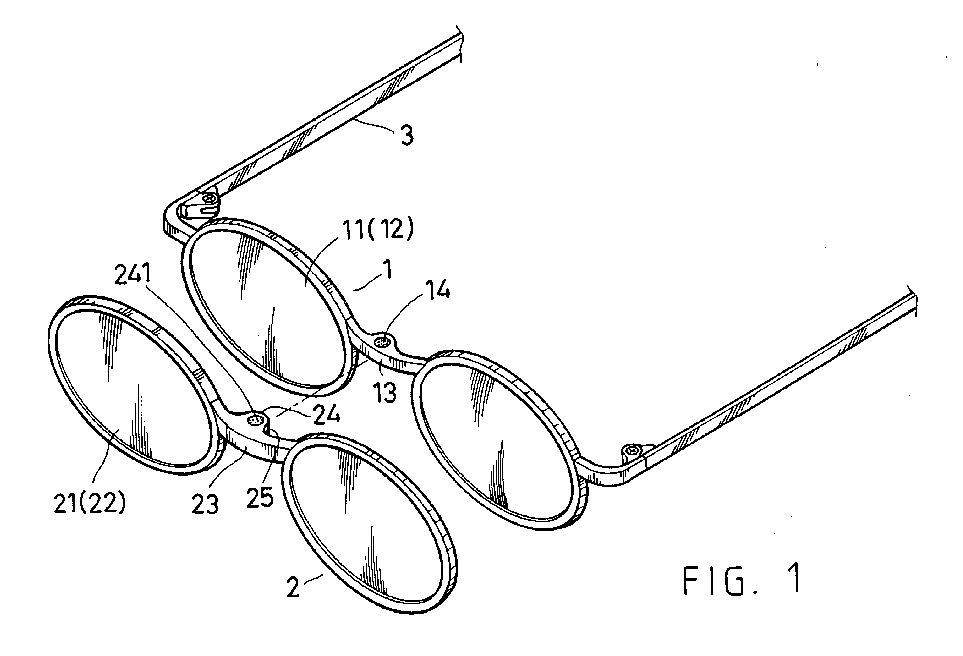

First, referring to FIG. 1, the present invention is provided with an eyeglass frame coupling system for securely coupling an auxiliary eyeglass frame 2 to a primary eyeglass frame 1.

The primary eyeglass frame 1 is made of metal or plastics and provided with two holes 11 for optical lenses 12 to be mounted therein and temples 3 being pivoted at two ends of the primary eyeglass frame 1.

The auxiliary eyeglass frame 2 having a shape corresponding to that of the primary eyeglass frame 1 is made of metal or plastics and provided with two holes 21 for sun-shading lenses 22 to be mounted therein.

The coupling system includes one coupling magnet 14 secured to the bridge 13 of the primary eyeglass frame 1 and one clipping structure formed on the bridge 23 of the auxiliary eyeglass frame 2. The coupling magnet 14 passes through the bridge 13 and has distal first and second ends. The clipping structure is provided for releasably engaging the bridge 13 of the primary eyeglass frame 1 and includes a pair of opposed flanges 24, 25 and first and second magnets 241, 251. The pair of opposed flanges 24, 25 are spaced one from the other to capture the bridge 13 of the primary eyeglass frame 1 therebetween. The first and second magnets 241, 251 are respectively secured to the pair of opposed flanges 24, 25 for respective attractive magnetic coupling to both of the first and second ends of the coupling magnet 14 of the primary eyeglass frame 1.

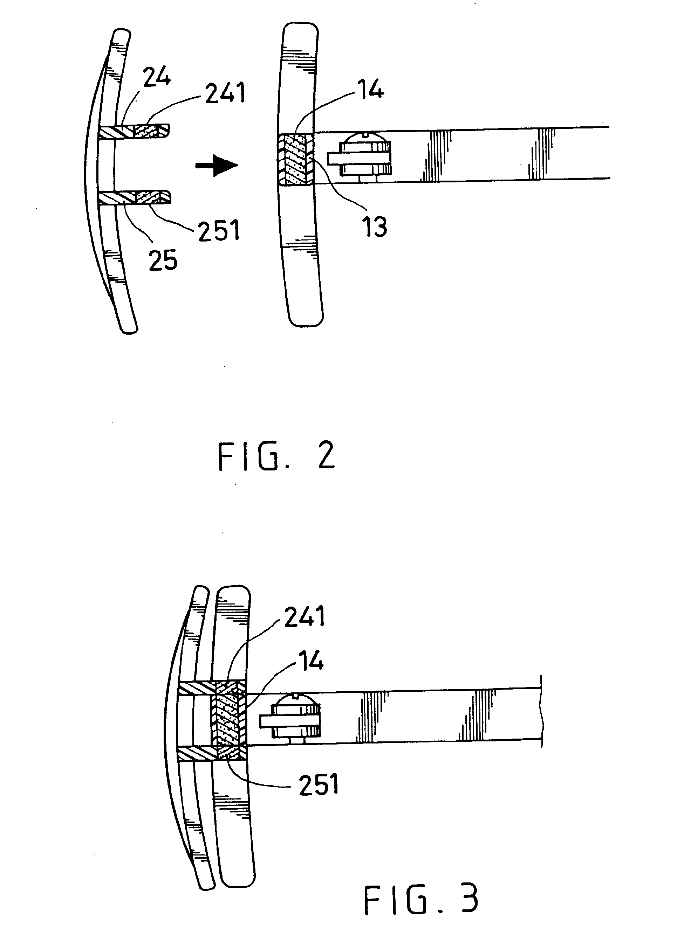

Referring to FIG. 2, while being used, the auxiliary eyeglass frame 2 can be directly secured to the primary eyeglass frame 1 with the bridge 13 of the primary eyeglass frame 1 releasably engaging the clipping structure on the bridge 23 of the auxiliary eyeglass frame 2 in a magnetically reinforced manner. That is, the first and second magnets 241, 251 in the pair of opposed flanges 24,25 respectively attractively magnetically couple to both of the first and second ends of the coupling magnet 14 in the bridge 13 of the primary eyeglass frame 1, as showing in FIG 3.

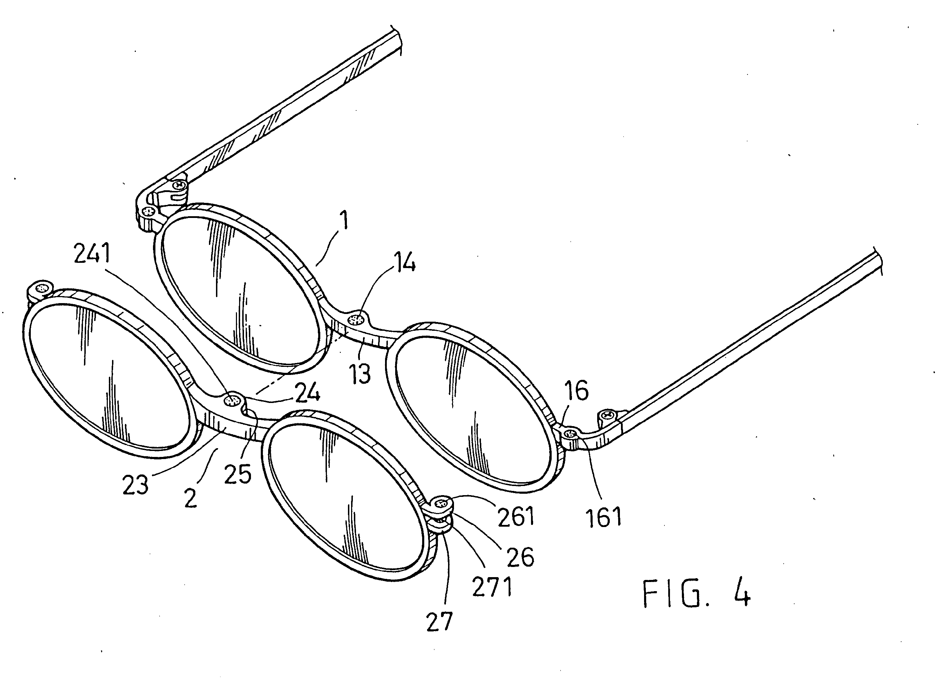

Besides, referring to FIG. 4, the coupling system may further include a pair of coupling magnets 161 secured respectively to a pair of the predetermined frame portions each formed in the primary eyeglass frame 1 adjacent a hinge 16 thereof and a pair of clipping structures each including a pair of opposed flanges 26, 27 and first and second magnets 261, 271 and formed in opposing end portions of the auxiliary eyeglass frame 2 for releasably engaging the pair of coupling magnets 161 disposed adjacent the primary eyeglass frame hinges 16. Thus, the auxiliary eyeglass frame 2 can be firmly secured to the primary eyeglass frame 1 not only by the magnetic forces of the magnets 14, 241. 251 and the clipping of the pair of opposed flanges 24,25 on the center but also by the magnetic forces of the magnets 161, 261, 271 and the clipping of the pair of opposed flanges 26, 27 on both ends.

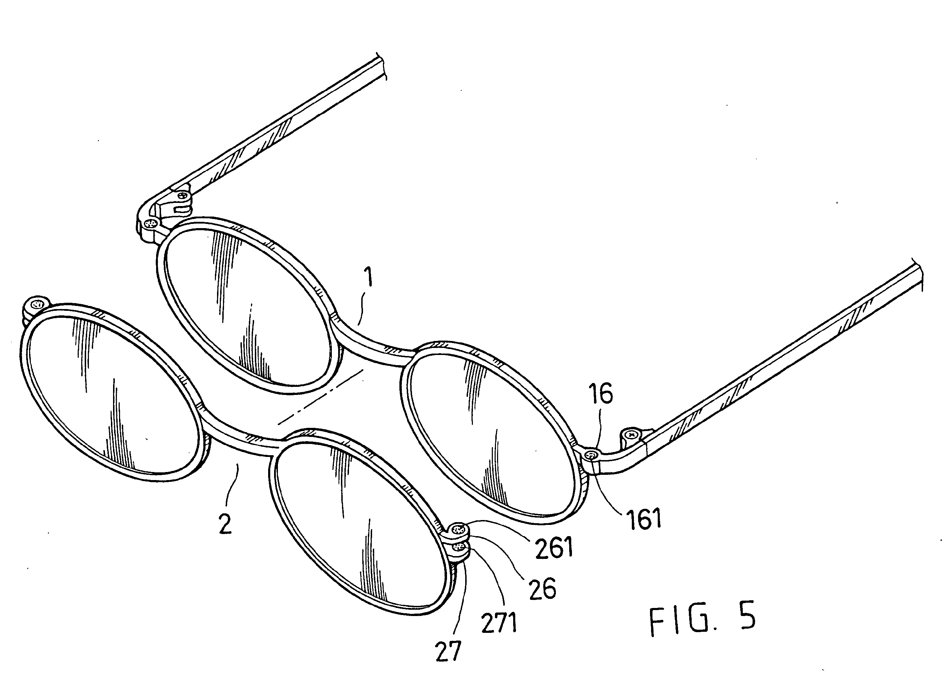

Referring to FIG. 5, the coupling system may only include a pair of coupling magnets 161 secured respectively to a pair of the predetermined frame portions each formed in the primary eyeglass frame 1 adjacent a hinge 16 thereof and a pair of clipping structures each including a pair of opposed flanges 26, 27 and first and second magnets 261, 271 and formed in opposing end portions of the auxiliary eyeglass frame 2 for releasably engaging the pair of coupling magnets 161 disposed adjacent the primary eyeglass frame hinges 16. Thus, the auxiliary eyeglass frame 2 can be firmly secured to the primary eyeglass frame 1 by the magnetic forces of the magnets 161, 261, 271 and the clipping of the pair of opposed flanges 26, 27 on both ends.

While the preferred embodiments of the invention have been described above, it will be recognized and understood that various modifications may be made therein and the appended claims are intended to cover all such modifications which may fall within the spirit and scope of the invention.

## Claims

1. A system for securely coupling an auxiliary eyeglass frame to a primary eyeglass frame comprising:
(a) at least one coupling magnet secured to a predetermined frame portion of one of the primary and auxiliary eyeglass frames, said coupling magnet passing through said predetermined frame portion of the eyeglass frame, said coupling magnet having distal first and second ends; and,
(b) at least one clipping structure formed on the other of the primary and auxiliary eyeglass frames for releasably engaging said predetermined frame portion, said clipping structure including :
(1) a pair of opposed flanges spaced one from the other to capture said predetermined frame portion therebetween; and,
(2) at least first and second magnets respectively secured to said pair of opposed flanges for respective attractive magnetic coupling to both of said first and second ends of said coupling magnet;
whereby the said predetermined frame portion of one of the primary and auxiliary eyeglass frames releasably engages said clipping structure of the other of the eyeglass frames in a magnetically reinforced manner.

2. The coupling system as recited in claim 1 wherein said predetermined frame portion is formed on a bridge of the primary eyeglass frame; and, said clipping structure is formed on a bridge of the auxiliary eyeglass frame.

3. The coupling system as recited in claim 2 further comprising at least a pair of said coupling magnets secured respectively to a pair of said predetermined frame portions each formed in the primary eyeglass frame adjacent a hinge thereof; and, at least a pair of said clipping structures each formed in opposing end portions of the auxiliary eyeglass frame for releasably engaging said pair of coupling magnets disposed adjacent the primary eyeglass frame hinges.

4. The coupling system as recited in claim 1 comprising at least a pair of said coupling magnets secured respectively to a pair of said predetermined frame portions, each of said predetermined frame portions being formed in the primary eyeglass frame adjacent a hinge thereof; and, at least a pair of said clipping structures each formed in opposing end portions of the auxiliary eyeglass frame for releasably engaging said pair of coupling magnets.
